(19) Europäisches Patentamt / European Patent Office / Office européen des brevets

(11) **EP 4 316 882 A1**

(12) **EUROPEAN PATENT APPLICATION**
published in accordance with Art. 153(4) EPC

(43) Date of publication:
**07.02.2024 Bulletin 2024/06**

(21) Application number: **21936496.5**

(22) Date of filing: **17.04.2021**

(51) International Patent Classification (IPC):
***B60J 7/057*** (2006.01)

(52) Cooperative Patent Classification (CPC):
**B60J 7/057**

(86) International application number:
**PCT/CN2021/087959**

(87) International publication number:
**WO 2022/217622 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang**
**Shenzhen, Guangdong 518129 (CN)**

(72) Inventors:
• **LI, Hongyan**
**Shenzhen, Guangdong 518129 (CN)**
• **LIAN, Hao**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA PROCESSING METHOD AND APPARATUS**

(57) This application provides a data processing method and apparatus. The method includes: obtaining a status of a second object of a vehicle; and determining, based on the status of the second object and according to a first rule, whether a status of a first object of the vehicle can be a target status. The first rule indicates a relationship between the second object and the first object in the target status. Whether an object can be set to be in the target status is determined based on a status of another object in the vehicle, so that flexibility of a processing result can be improved. Impact of a status of each object on a status setting of another object is fully considered, to improve driving safety of the vehicle.

<u>100</u>

S110: Obtain a status of a second object of a vehicle

S120: Determine, based on the status of the second object and according to a first rule, whether a status of a first object of the vehicle can be a target status, where the first rule indicates a relationship between the second object and the first object in the preset status

FIG. 1

**Description**

**TECHNICAL FIELD**

This application relates to the field of data processing, and specifically, to a data processing method and apparatus.

**BACKGROUND**

With social development, intelligent terminals such as an intelligent transportation device, a smart household device, and a robot are gradually entering people's daily lives.

An in-vehicle infotainment system is an in-vehicle electronic device installed in a vehicle. Most of in-vehicle infotainment systems are installed on a center console, and the in-vehicle infotainment system may be disposed together with a screen, or the in-vehicle infotainment system and a display may be disposed separately. With the development of science and technology, the in-vehicle infotainment system has developed toward intelligence and informatization. Currently, in addition to functions such as conventional radio, music and video playing, and navigation, functions such as information communication between a vehicle and a pedestrian and information communication between a vehicle and the outside may be further implemented by the in-vehicle infotainment system.

Currently, a knowledge base is generally required to implement a human-machine interaction function of the in-vehicle infotainment system. The knowledge base includes a plurality of requests and a response corresponding to each request. After obtaining a user input request, the in-vehicle infotainment system identifies, in the knowledge base through retrieval, a request that is most similar to the user input request, and determines a response corresponding to the most similar request. If the response corresponding to the most similar request is an answer, the answer may be provided for a user; or if the response corresponding to the most similar request is a control signal, the control signal may be executed.

The intelligent terminals are gradually popularized, and how to improve flexibility of a response provided for a user is an urgent problem to be resolved currently. In addition, popularity of intelligent devices is high, and how to establish a knowledge base and a question-answering system is worth studying.

**SUMMARY**

This application provides a data processing method and apparatus, to determine, based on a status of another object in a vehicle, whether an object can be set to be in a target status, to improve flexibility of a processing result.

According to a first aspect, a data processing method is provided. The method includes: obtaining a status of a second object of a vehicle; and determining, based on the status of the second object and according to a first rule, whether a status of a first object of the vehicle can be a target status, where the first rule indicates a relationship between the second object and the first object in the target status.

Whether an object can be set to be in the target status is determined based on a status of another object in the vehicle, so that flexibility of a processing result can be improved. Impact of a status of each object on a status setting of another object is fully considered, to improve driving safety of the vehicle.

With reference to the first aspect, in some possible embodiments, the method further includes: obtaining a user instruction, where the user instruction includes information indicating the first object in the target status.

When the user instruction is obtained, whether the first object can be set to be in the target status is determined based on the user instruction. The user instruction may be used as a trigger condition for determining whether the first object can be set to be in the target status. When the trigger condition is met, whether the first object can be set to be in the target status is determined, so that a quantity of determining times can be reduced, and an operation amount can be reduced.

With reference to the first aspect, in some possible embodiments, the obtaining a status of a second object includes: detecting the status of the second object according to the first rule, where the first rule is a rule corresponding to the first object in the target status.

A first rule corresponding to the target status of the first object may be determined based on a user request, so that a status of the second object in the first rule is detected, and the user request may be processed in time without waiting for a periodic detection result of the status of the second object, and this shortens processing time.

With reference to the first aspect, in some possible embodiments, the obtaining a user instruction includes: obtaining a natural language input by a user; and extracting a plurality of instruction elements in the natural language to form the user instruction, where the user instruction includes the plurality of instruction elements, each instruction element is determined based on a word of a preset type in the natural language, the plurality of instruction elements include a first instruction element and a second instruction element, the first instruction element indicates the first object, and the second instruction element indicates the target status. The method further includes: determining the first rule based on the user instruction, where the first rule is the rule corresponding to the first object in the target status.

The instruction element in the natural language input by the user may be determined by extracting, based on a preset type, words in the natural language input by the user. The first object and the target status are determined based on the instruction element, to determine the first rule corresponding to the first object in the target status, so that the determined first rule is more accurate.

With reference to the first aspect, in some possible embodiments, the first rule includes the first instruction element and the second instruction element.

The user instruction determined based on the natural language input by the user is represented by using an element, and the rule is also represented by using an element. When the user inputs the natural language, a manner of determining the first rule corresponding to the natural language input by the user is more convenient.

With reference to the first aspect, in some possible embodiments, the method further includes: obtaining the status of the first object; and the determining, based on the status of the second object and according to a first rule, whether a status of a first object of the vehicle can be a target status includes: when the status of the first object is the target status, determining, based on the status of the second object and according to the first rule, whether the status of the first object can be the target status.

When the status of the first object is the target status, whether the first object can be set to be in the target status can be determined. That the first object is in the target status may be used as a trigger condition for determining whether the first object can be set to be in the target status. When the trigger condition is met, whether the first object can be set to be in the target status is determined, so that a quantity of determining times can be reduced, and an operation amount can be reduced.

With reference to the first aspect, in some possible embodiments, the first object is a component in the vehicle, a feature of the component, a feature of the vehicle, or a feature of an environment around the vehicle.

According to a second aspect, a data processing apparatus is provided, including an obtaining module and a processing module. The obtaining module is configured to obtain a status of a second object of a vehicle. The processing module is configured to determine, based on the status of the second object and according to a first rule, whether a status of a first object of the vehicle can be a target status, where the first rule indicates a relationship between the second object and the first object in the target status.

With reference to the second aspect, in some possible implementations, the obtaining module is further configured to obtain a user instruction, where the user instruction includes information indicating the first object in the target status.

With reference to the second aspect, in some possible implementations, the obtaining module is further configured to detect the status of the second object according to the first rule, where the first rule is a rule corresponding to the first object in the target status.

With reference to the second aspect, in some possible implementations, the obtaining module is further configured to obtain a natural language input by a user; and the processing module is further configured to extract a plurality of instruction elements in the natural language to form the user instruction, where the user instruction includes the plurality of instruction elements, each instruction element is determined based on a word of a preset type in the natural language, the plurality of instruction elements include a first instruction element and a second instruction element, the first instruction element indicates the first object, and the second instruction element indicates the target status. The method further includes: determining the first rule based on the user instruction, where the first rule is the rule corresponding to the first object in the target status.

With reference to the second aspect, in some possible implementations, the first rule includes the first instruction element and the second instruction element.

With reference to the second aspect, in some possible implementations, the obtaining module is further configured to obtain a status of the first object; and the processing module is configured to: when the status of the first object is the target status, determine, based on the status of the second object and according to the first rule, whether the status of the first object can be the target status.

With reference to the second aspect, in some possible implementations, the first object is a component in the vehicle, a feature of the component, a feature of the vehicle, or a feature of an environment around the vehicle.

According to a third aspect, a data processing method is provided. The method includes: receiving a first identifier sent by a vehicle-side apparatus; and sending, based on a correspondence between identification information and a knowledge set, a first knowledge set corresponding to the first identifier to the vehicle-side apparatus.

First identification information may indicate at least one of a model, a brand, or a system version of a vehicle in which the vehicle-side apparatus is located, or the first identifier indicates a first function of the vehicle in which the vehicle-side apparatus is located.

The vehicle-side apparatus may report, to a cloud apparatus, a feature of a vehicle in which the vehicle-side apparatus is located, for example, a feature such as a vehicle model, a brand, or a system version number. The cloud may send a related knowledge base instead of all knowledge bases to the vehicle side based on the feature of the current vehicle, to reduce an in-vehicle storage amount.

According to a fourth aspect, a data processing method is provided. The method includes: A vehicle-side apparatus sends a first identifier to a cloud device; and receives a first knowledge set sent by a cloud apparatus, where the first knowledge set is a knowledge set corresponding to the first identifier in a plurality of knowledge sets stored in the cloud apparatus.

According to a fifth aspect, a data processing apparatus is provided, including a processor and a memory. The memory is configured to store a program, and when the program is executed in the processor, the processor is configured to perform the method according to the first aspect, the third aspect, or the fourth aspect.

According to a sixth aspect, a computer program storage medium is provided. The computer program storage medium has program instructions, and when the program instructions are executed, the method according to the first aspect, the third aspect, or the fourth aspect is performed.

According to a seventh aspect, a chip is provided. The chip system includes at least one processor, and when program instructions are executed in the at least one processor, the method according to the first aspect, the third aspect, or the fourth aspect is performed.

Optionally, in an implementation, the chip may further include the memory, and the memory stores the instructions. The processor is configured to execute the instructions stored in the memory, and when the instructions are executed, the processor is configured to perform the method in any one of the implementations of the first aspect, the third aspect or the fourth aspect.

The chip may be specifically a field-programmable gate array (field-programmable gate array, FPGA) or an application-specific integrated circuit (application-specific integrated circuit, ASIC).

According to an eighth aspect, a vehicle is provided, including the data processing apparatus according to the second aspect or the fifth aspect.

It should be understood that the data processing method and apparatus provided in embodiments of this application may be used to improve data processing flexibility and vehicle traveling safety. Whether an object can be set to the target status is determined based on a status of another object in the vehicle, so that flexibility of a processing result can be improved. Impact of a status of another object on status setting of an object is fully considered, and a status of the object in the vehicle is controlled based on a determining result of whether the object can be set to be in the target status, so that driving safety of the vehicle can be improved. A scenario-based question-answering system may be provided by using the foregoing method. For example, when a vehicle speed is greater than 100 km/h, and a user in the vehicle raises a question that whether a window can be opened, the scenario-based question-answering system may feed back, according to a current high-speed driving scenario, that the current user cannot open the window because the vehicle speed is too high, and this improves flexibility and intelligence of the question-answering system.

In addition, in this embodiment of this application, a cloud knowledge base is established based on a plurality of resources such as an automobile specification, open source knowledge, and personalized knowledge of a user on the cloud. A vehicle-side apparatus (for example, a vehicle, an in-vehicle apparatus, or an in-vehicle chip) may directly obtain required knowledge from the cloud by using an air interface signaling interaction or an over-the-air OTA upgrade technology, to improve a processing capability of the vehicle side and performance of the question-answering system. Knowledge in general fields, such as the automobile regulation, needs to be obtained only from the cloud, and does not need to build a similar knowledge base for a plurality of times. This also reduces development costs of a vehicle developer.

The vehicle side may report a feature of the current vehicle to the cloud, for example, a feature such as a vehicle model, a brand, or a system version number. The cloud may send a related knowledge base instead of all knowledge bases to the vehicle side based on the feature of the current vehicle, to reduce an in-vehicle storage amount.

## BRIEF DESCRIPTION OF DRAWINGS

FIG. 1 is a functional block diagram of a vehicle to which an embodiment of this application is applicable;
FIG. 2 is a schematic diagram of a structure of an interactive system according to an embodiment of this application;
FIG. 3 is a schematic flowchart of a data processing method according to an embodiment of this application;
FIG. 4 is a schematic flowchart of an interaction method according to an embodiment of this application;
FIG. 5 is a schematic flowchart of a method for establishing a cloud-side knowledge base according to an embodiment of this application;
FIG. 6 is a schematic flowchart of a data processing method according to an embodiment of this application;
FIG. 7 is an example of a finite state transducer according to an embodiment of this application;
FIG. 8 is a schematic flowchart of a data processing method according to an embodiment of this application;
FIG. 9 is a schematic flowchart of another data processing method according to an embodiment of this application;

FIG. 10 is a schematic flowchart of still another data processing method according to an embodiment of this application;

FIG. 11 is a schematic diagram of a structure of a data processing apparatus according to an embodiment of this application; and

FIG. 12 is a schematic diagram of a structure of another data processing apparatus according to an embodiment of this application.

## DESCRIPTION OF EMBODIMENTS

The following describes the technical solutions in this application with reference to the accompanying drawings.

With the development of intelligent and networked vehicles, an automotive intelligent voice assistant (automotive smart assistant) develops rapidly. Based on visual and tactile human-machine interaction, the automotive intelligent voice assistant provides a multi-modal interaction mode through a voice. The intelligent voice assistant is a goal-oriented or task-oriented platform that has a cognitive function and that can execute instructions or provide a service for a user, and features cognitive capabilities, context awareness, multi-mode communication, multi-device compatibility, and the like.

An in-vehicle infotainment system is generally an in-vehicle infotainment product installed in a vehicle, and may be understood as an in-vehicle device. Most of in-vehicle infotainment systems are installed on a center console, and the in-vehicle infotainment system may be disposed together with a screen, or the in-vehicle infotainment system and a display may be disposed separately. With the development of science and technology, the in-vehicle infotainment system has developed toward intelligence and informatization. Currently, in addition to functions such as conventional radio, music and video playing, and navigation, functions such as information communication between a vehicle and a pedestrian and information communication between a vehicle and the outside may be further implemented by the in-vehicle infotainment system. This enhances user experience.

As an important function of the automotive intelligent voice assistant, the human-machine interaction of the in-vehicle infotainment system can provide services such as content query of the in-vehicle infotainment system, vehicle status query, open domain search, and fault Q&A for the user.

A knowledge base is generally required to implement a human-machine interaction function of the in-vehicle infotainment system. The knowledge base includes a plurality of requests and a response corresponding to each request. After obtaining a user input request, the in-vehicle infotainment system identifies, in the knowledge base through retrieval, a request that is most similar to the user input request, and determines a response corresponding to the most similar request. The response corresponding to the most similar request may be displaying information to the user by using a display or a speaker, or may be sending a control signal to control the vehicle.

For example, the user requests to "open the left window", and the in-vehicle infotainment system identifies, in the knowledge base, that a most similar request is to "open the left vehicle window", a response corresponding to the most similar request is sending a control signal to indicate to open the left vehicle window, so that the in-vehicle infotainment system can control the left vehicle window of the vehicle to open.

When a vehicle runs at a high speed, for example, a vehicle speed is greater than or equal to 60 km/h (km/h) or 80 km/h, opening the vehicle window increases wind resistance, and this increases fuel consumption. A fluctuating air flow generated by wind pressure forms resonance with the vehicle speed, which produces low frequency noise. In addition, due to a large fluctuating air flow in the vehicle, a driver and a passenger may fail to open their eyes, affecting driving safety of the vehicle.

Intelligent terminals are gradually popularized, and how to improve flexibility of a response provided for the user is an urgent problem to be resolved currently.

To resolve the foregoing problem, embodiments of this application provide a data processing method. The data processing method may be performed by a cloud apparatus (which may also be referred to as a cloud side in this application), or may be performed by a vehicle-side apparatus (which may also be referred to as a terminal side in this application). The cloud apparatus may be a server. The server may be one or more of different types of servers such as a physical server, a virtual server, and an edge server. The cloud apparatus may have a processing function and a receiving and sending function. The vehicle-side apparatus may be one or more of apparatuses such as a vehicle, an in-vehicle apparatus, and a chip.

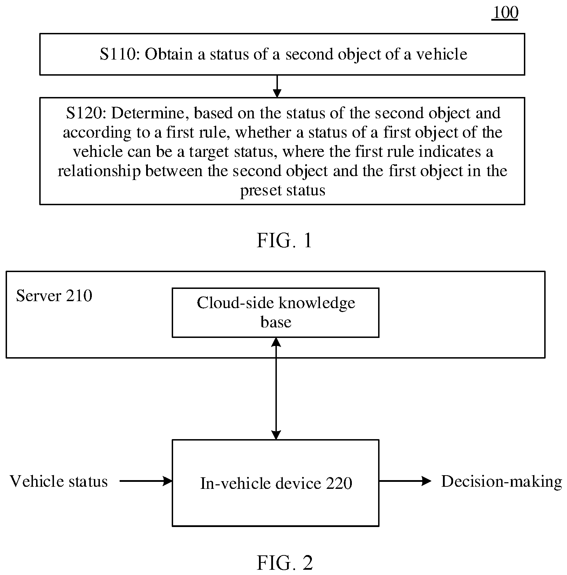

FIG. 1 is a schematic flowchart of a data processing method according to an embodiment of this application.

The data processing method 100 may include S110 and S 120.

S110: Obtain a status of a second object of a vehicle.

S 120: Determine, based on the status of the second object and according to a first rule, whether a status of a first object of the vehicle can be a target status, where the first rule indicates a relationship between the second object and the target status of the first object.

An object of the vehicle may be a component in the vehicle, for example, a vehicle door, a vehicle window, or a vehicle light. The object of the vehicle may alternatively be a feature of the vehicle or a feature of an environment around the vehicle, for example, a vehicle speed and visibility.

A status of the object represents a physical quantity of the object. For example, a status of the vehicle door may be open or closed, and a status of the vehicle speed may be a speed value.

For example, the first object may be the vehicle window, and the second object may be the vehicle speed. The target status of the first object may be a state when the vehicle window is open. The first rule may be that the vehicle window cannot be opened when the vehicle speed is greater than or equal to 60 km/h.

Whether the vehicle window can be opened may be determined based on the status of the second object and the vehicle speed and according to the first rule.

Output information of a sensor may be received to determine the status of the object of the vehicle. Alternatively, a controller area network (controller area network, CAN) signal may be detected to determine the status of the object of the vehicle. The CAN signal can be used to implement data communication between an internal control system, a detection device, and an execution device of the vehicle.

In S 110 and S 120, whether the first object of the vehicle can be set to be in the target status is determined based on the status of the second object of the vehicle, so that flexibility of a processing result can be improved. Impact of a status of each object on a status setting of another object may be fully considered, to improve driving safety of the vehicle.

In some embodiments, S 110 and S 120 may be performed when a user instruction is obtained.

Before S 110, the method may further include: obtaining the user instruction. The user instruction includes information indicating the first object in the target status.

When the user instruction is obtained, whether the first object can be set to be in the target status is determined based on the user instruction. A determining manner is simple.

For example, when a user input is used to ask how to open the vehicle window or a user requests to open the vehicle window, that the vehicle window is opened may be used as the target status of the first object.

When the user instruction is obtained, the first rule may be determined based on the user instruction. The first rule is a rule corresponding to the first object in the target status, the second object is determined from a plurality of objects of the vehicle according to the first rule, and whether the first object can be in the target status is determined based on the status of the second object and according to the first rule.

That is, the status of the second object may be detected according to the first rule.

A first rule corresponding to the target status of the first object may be determined based on a user request, so that a status of the second object in the first rule is detected, and the user request may be processed in time without waiting for a periodic detection result of the status of the second object. This shortens processing time.

It should be understood that objects in different statuses may correspond to different rules. A rule corresponding to an object in a status indicates a relationship between the object in the status and another object.

The user instruction may be obtained by processing a natural language input by the user.

The natural language input by the user may be obtained.

A plurality of instruction elements in the natural language input by the user may be extracted to form the user instruction. The user instruction includes the plurality of instruction elements. Each instruction element is determined based on a word of a preset type in the natural language input by the user. The plurality of instruction elements include a first instruction element and a second instruction element. The first instruction element indicates the first object. The second instruction element indicates the target status.

The first rule may be determined based on the user instruction. The first rule is a rule corresponding to the first object in the target status.

The target status of the first object may be understood as the first object in the target status or the first object in the target status.

The instruction element in the natural language input by the user may be determined by extracting, based on a preset type, words in the natural language input by the user. The first object and the target status are determined based on the instruction element, to determine the first rule corresponding to the first object in the target status, so that the determined first rule is more accurate.

A preset type corresponding to the first instruction element may be an entity, and the entity may indicate the component in the vehicle, the feature of the vehicle component, the feature of the vehicle, the feature of an ambient environment, or the like. A preset type corresponding to the second instruction element may be a status.

For example, a natural language input by the user may be "open the vehicle window for me ", where a word of an entity type is "vehicle window", and a word of a status type is "open". The user instruction may be the first instruction element and the second instruction element, where the first instruction element is used for " vehicle window", and the second instruction element indicates "open".

The first rule may be a rule including the first instruction element and the second instruction element.

The user instruction determined based on the natural language input by the user is represented by using an element, and the rule is also represented by using the element. When the user inputs the natural language, a manner of determining the first rule corresponding to the natural language input by the user is more convenient.

In some other embodiments, the status of the first object may be obtained. When the status of the first object is the target status, the second object is determined from the plurality of objects of the vehicle according to the first rule corresponding to the first object in the target status. Therefore, when the status of the first object is the target status, whether the status of the first object of the vehicle can be the target status is determined based on the status of the second object and according to the first rule.

The status of the second object may be obtained after the second object is determined. Alternatively, the status of the second object may be obtained when the status of the first object is obtained. For example, the status of the vehicle may be obtained, and the status of the vehicle includes the status of the first object and the status of the second object. Alternatively, a status of each object may be detected based on a detection periodicity corresponding to each object. The detection periodicity corresponding to each object may be the same or different.

After S 120 is performed, different operations may be performed based on whether the status of the first object can be the target status.

When it is determined that the status of the first object cannot be the target status, alarm information may be output.

When the status of the first object is the target status, it is determined that the status of the first object cannot be the target status, and alarm information may be output to remind the user to adjust the status of the first object.

When the user instruction is obtained, and the user instruction includes information indicating the first object in the target status, the output alarm information may be used as a feedback for the user instruction, to notify the user that the first object cannot be in the target status.

When it is determined that the status of the first object can be the target status, different processing may be performed based on a condition for triggering determining whether the status of the first object can be the target status.

When the status of the first object is the target status, the status of the first object may be determined as the target status, and no other operation may be performed, to maintain the first object in the target status.

When the user instruction is obtained, and the user instruction includes the information indicating the first object in the target status, if the user instruction indicates to set the first object to be in the target status, the user instruction may be executed to set the first object to be in the target status. For example, a control signal (for example, the CAN signal) for setting the first object to be in the target status may be output.

After S 120 is performed, input data may be input into an operation model, to obtain output data. The input data includes decision information and basic knowledge information, where the decision information indicates a determining result of whether the status of the first object can be the target status, and the basic knowledge information is knowledge related to the first object.

The output data may be obtained by processing the input data by using the operation model. The output data includes target knowledge related to the decision information in the basic knowledge information.

The decision information and the knowledge related to the first object are processed by using the operation model, and the target knowledge related to the decision information is selected from the knowledge related to the first object, to output the target knowledge related to the decision information. Content of output information is determined based on the decision information indicating whether a first event can be in the target status, so that the output information better conforms to the status of the vehicle, and user experience is improved.

The operation model is a neural network model obtained through training by using a training data set, the training data set includes a plurality of pieces of training data and annotation information corresponding to each piece of training data. The training data includes training decision information and training basic knowledge information, where the training decision information indicates whether a training object of the vehicle can be set to be in a training target status, the training basic knowledge information includes knowledge related to the training object, and the annotation information corresponding to the training data includes knowledge that is in the training basic knowledge information and that is related to the training decision information.

Step S 110 and step S 120 may be performed by a terminal device or a cloud device.

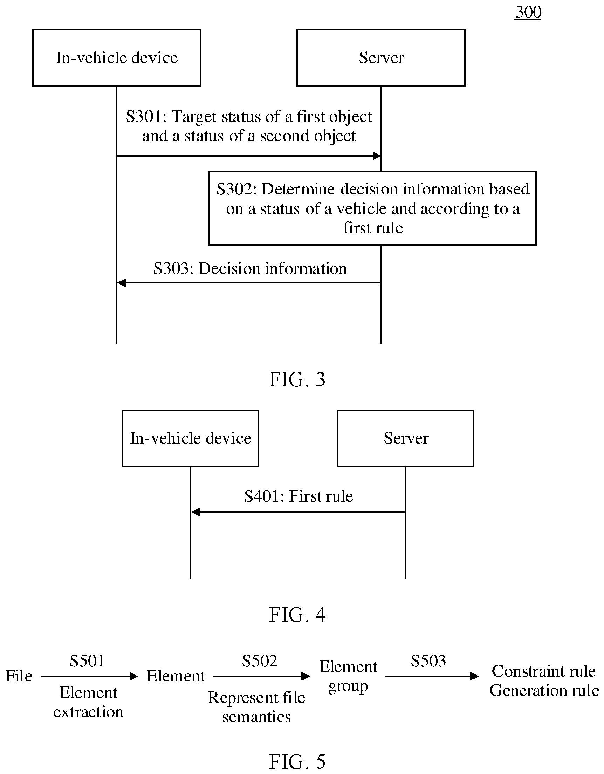

If an in-vehicle device performs S110 and S 120, the in-vehicle device or an in-vehicle memory needs to store the first rule. The in-vehicle device performs S110 and S 120. When the in-vehicle device cannot be connected to another network such as the Internet, the in-vehicle device can still accurately determine whether the status of the first object can be the target status, to avoid that a service cannot be provided for the user due to network interruption. For a manner in which the in-vehicle device obtains the first rule, refer to descriptions in FIG. 4.

If the in-vehicle device performs S 110 and S120, a server may receive the status of the second object sent by the in-vehicle device. The server may send a determining result of whether the first object can be in the target status to the in-vehicle device. For details, refer to the descriptions in FIG. 3.

A data processing method 800 may be applied to a scenario-based question-answering system. For example, when a vehicle speed is greater than 100 km/h, and a user in the vehicle raises a question that whether a window is allowed to open, the scenario-based question-answering system may feed back, according to a current high-speed driving scenario, that the current user is not allowed to open the window because the vehicle speed is too high, and this improves flexibility and intelligence of the question-answering system.

In addition, in this embodiment of this application, a cloud knowledge base is established based on a plurality of resources such as an automobile specification, open source knowledge, and user personalized knowledge on a cloud. A vehicle-side apparatus (for example, a vehicle, an in-vehicle apparatus, or an in-vehicle chip) may directly obtain required knowledge from the cloud by using an air interface signaling interaction or an over-the-air (over-the-air, OTA) upgrade technology, to improve a processing capability of the vehicle-side and performance of the question-answering system. Knowledge in a general field, for example, the automobile regulation, needs to be obtained only from the cloud, and similar knowledge bases do not need to be built on a plurality of vehicle-side devices for a plurality of times. This also reduces development costs of a vehicle developer.

The vehicle side may report a feature of a current vehicle to the cloud, for example, a feature such as a vehicle model, a brand, or a system version number. The cloud may send a related knowledge base instead of all knowledge bases to the vehicle side based on the feature of the current vehicle, to reduce space occupied by the knowledge base in the in-vehicle device.

The data processing method 100 may be performed in an interactive system.

FIG. 2 is a schematic diagram of an interactive system according to an embodiment of this application.

The interactive system includes a first electronic apparatus and a second electronic apparatus. The first electronic apparatus may be a cloud side device, for example, a server.

The second electronic apparatus may be a vehicle, an in-vehicle infotainment system, an on-board computer (On-board computer, or On-board PC), a chip (such as an on-board chip or a voice processing chip), a processor, a mobile phone, a personal computer, a smart band, a tablet computer, an in-vehicle voice device, an intelligent automobile, a media consumption device, a smart home device, an intelligent voice assistant on a wearable device that can make a sound, a smart sound box, or various machines or devices that can talk with a person, or the like.

The first electronic apparatus is a cloud device, and may be configured to establish a cloud-side knowledge base. The second electronic apparatus is a terminal device, and may obtain a usage status of a second electronic device. Through data interaction between the first electronic apparatus and the second electronic apparatus, when usage statuses of the second electronic device are different, different decision information may be determined, to perform different processing.

The following uses an example in which the second electronic apparatus is an in-vehicle device 220 for description. The in-vehicle device 220 may be an entire device, a chip, a printed circuit board (printed circuit board, PCB), or the like. The entire device is a complete set of devices, a single entire device, or an electromechanical product of a single form.

An interactive system 200 includes a server 210 and the in-vehicle device 220.

The server 210 may be configured to establish a cloud-side knowledge base.

The in-vehicle device 220 is located in a vehicle. The in-vehicle device 220 may obtain a status of the vehicle.

A decision may be made on an event by using the cloud-side knowledge base and the status of the vehicle, that is, whether the event can occur in the status of the vehicle is determined.

The cloud-side knowledge base includes a rule corresponding to an event, and the rule indicates a relationship between an event and another event. An event indicates a status of an object. The status of the vehicle may include a status of the another object.

An object of the vehicle may be a component in the vehicle, for example, a vehicle door, a vehicle window, or a vehicle light, or a component in a traveling system 110, a sensing system 120, or a control system 130. The object of the vehicle may alternatively be a feature of the vehicle or a feature of an environment around the vehicle, for example, a vehicle speed and visibility.

The server 210 may be configured to determine whether an event can occur, or the in-vehicle device 220 may determine whether an event can occur. In other words, both the server 210 and the in-vehicle device 220 may be configured to perform the data processing method shown in FIG. 1.

FIG. 3 is a schematic flowchart of a data processing method according to an embodiment of this application.

The data processing method performed by a cloud apparatus and a vehicle-side apparatus in an interactive system is described by using a server and an in-vehicle device as an example.

The server may be, for example, one or more types of servers, such as a network server, an application server, a management server, a cloud server, an edge server, or a virtual server (a server virtualized by using a plurality of physical resources).

The server stores a cloud-side knowledge base, and the cloud-side knowledge base includes a plurality of rules.

A method 300 includes steps S301 to S303.

In S301, the in-vehicle device may send a target status of a first object of a vehicle and a status of a second object of the vehicle to the server.

In S302, the server determines decision information based on the status of the second object and according to a first rule, where the decision information indicates whether the first object can be in the target status. The first rule is a rule corresponding to the target status of the first obj ect.

That the first object is in the target status may be understood as a first event.

The first rule indicates a relationship between the first object and the second object that are in the target status.

For example, the first event is "the vehicle window is opened", and a rule corresponding to the first event may be "the vehicle window cannot be opened when the vehicle speed is greater than or equal to 60 km/h". The second object is the "vehicle speed", and "the vehicle speed is greater than or equal to 60 km/h" may be understood as a second event, or may be referred to as a preset status of the second object. In the first rule, the first event and the second event have a mutually exclusive relationship. In other words, the first rule is represented by using the relationship between the first event and the second event, and the second event indicates the preset status of the second event in the vehicle.

In some embodiments, the in-vehicle device may send status information of the vehicle to the server. The status information of the vehicle includes a status of each object of the vehicle, for example, includes a status of the first object and the status of the second object.

The cloud-side knowledge base includes a rule corresponding to each of a plurality of events, and the first rule may be understood as the rule corresponding to the first event in the plurality of events. The server may determine, based on the status of the vehicle, whether the plurality of events in the cloud-side knowledge base occur. When the status of the first object is the target status, the first event occurs. The server may determine the decision information according to the first rule corresponding to the first event and based on the status of the second obj ect.

In S303, the server sends the decision information to the in-vehicle device.

The in-vehicle device may control the vehicle based on the received decision information. For example, if the decision information indicates that the first event can occur, the in-vehicle device can set the first object to be in the target status, or keep the first object in the target status.

In some embodiments, the server may alternatively perform a data processing method 900, and send the generated natural language information to the in-vehicle device. The server may alternatively perform a data processing method 1000, and send output data to the in-vehicle device.

FIG. 4 is a schematic flowchart of an interaction method according to an embodiment of this application.

The data processing method performed by a cloud apparatus and a vehicle-side apparatus in an interactive system is described by using an example between a server and an in-vehicle device. The interaction method includes S401.

The server stores a cloud-side knowledge base, and the cloud-side knowledge base includes a plurality of rules.

In S401, the server sends a first rule to the in-vehicle device.

The in-vehicle device may determine a decision based on a status of a vehicle and according to the first rule, where the decision indicates whether a first event may occur.

The first rule indicates a relationship between the first event and a second event, the first event indicates a preset status of a first object in the vehicle, and the second event indicates a preset status of the second event in the vehicle. The status of the vehicle includes a status of the second object.

The knowledge base includes a rule corresponding to each of a plurality of events, and the first rule may be understood as a rule corresponding to the first event.

Storage formats of the first rule in the in-vehicle device and the server may be consistent or inconsistent. Data format conversion can be performed based on a predefined conversion relationship.

When the storage formats of the first rule in the in-vehicle device and the server are inconsistent, the server may perform data format conversion before sending the first rule to the in-vehicle device, convert the first rule into a storage format of the in-vehicle device, send a first rule obtained after the format conversion to the in-vehicle device, and the in-vehicle device stores the received first rule. After receiving the first rule, the in-vehicle device may perform data format conversion on the received first rule, and store a first rule obtained after the format conversion.

A data format of the rule stored in the server is set to be consistent with a data format of the rule stored in the in-vehicle device, so that computing resources can be saved. However, because in-vehicle devices produced by different enterprises have limitations on data formats, when the rule stored in the server and the rule stored in the in-vehicle device can store data in different data formats, effective transmission of the rule between the server and the in-vehicle device can be completed by using the predefined conversion relationship. In this manner, construction costs can be reduced, and flexibility can be improved.

The cloud-side knowledge base may include a plurality of knowledge sets and an identifier corresponding to each knowledge set.

Before S401 is performed, the in-vehicle device may send a request identifier to the server.

In S401, the server may send a knowledge set corresponding to the request identifier to the in-vehicle device, where the knowledge set corresponding to the request identifier includes the first rule.

In the cloud-side knowledge base, each knowledge set may be divided based on factors such as a vehicle model, a function, and an object in a vehicle. The request identifier may indicate the vehicle model of the vehicle, or may indicate a function or an object of the vehicle.

For example, the cloud-side knowledge base may include a general knowledge set and a plurality of vehicle model knowledge sets. The general knowledge set includes rules applicable to various vehicles. There is a correspondence between a vehicle model knowledge set and a vehicle model identifier, the vehicle model identifier indicates the vehicle model, and each vehicle knowledge set includes a rule related to a vehicle model identifier corresponding to the vehicle model knowledge set. The correspondence between a vehicle model knowledge set and a vehicle model identifier may be represented as a table, a function, or the like.

The in-vehicle device may send the request identifier to the server. The request identifier indicates a vehicle model of a vehicle in which the in-vehicle device is located.

The server may send, to the in-vehicle device, a vehicle model knowledge set corresponding to the request identifier.

The server may alternatively send the general knowledge set to the in-vehicle device.

The in-vehicle device stores the received vehicle model knowledge set and the general knowledge set, to form a terminal-side knowledge base. The in-vehicle device may perform steps in a data processing method 100 by using the terminal-side knowledge base. The terminal-side knowledge base includes the first rule.

Each rule may be represented by using an identifier of the rule. The identifier of each rule may be, for example, "automotive enterprise number-vehicle model number-rule number". The identifier of the rule may be a primary key. The primary key is a term in a database. In the knowledge base, the primary key needs to be unique. In other words, the identifier of the rule may be used to uniquely identify a rule in the knowledge base.

The in-vehicle device may send the request identifier to the server, where the request identifier may be the vehicle model number, and is used to request a rule corresponding to the vehicle model number. The request identifier may alternatively be a rule identifier, and is used to request a rule corresponding to the rule identifier. This is not limited in embodiments of this application.

The cloud-side knowledge base is established based on a plurality of resources by a cloud device such as a server, and a vehicle-side device obtains required knowledge from a cloud, to improve a processing capability of the vehicle-side device and performance of a question-answering system. In addition, knowledge in general fields, such as an automobile regulation, needs to be obtained only from the cloud, and similar knowledge bases do not need to be built on each vehicle-side device repeatedly. This also reduces development costs of a vehicle developer.

The vehicle side may report a feature of a current vehicle to the cloud, for example, a feature such as a vehicle model, a brand, or a system version number. The cloud may send a related knowledge base instead of all knowledge bases to the vehicle side based on the feature of the current vehicle, to reduce space occupied by the knowledge base in the in-vehicle device.

Data formats of a terminal-side knowledge base stored in the in-vehicle device and a cloud-side knowledge base stored in the server may be generally set to be consistent or inconsistent.

The server sends update notification information to the in-vehicle device when the cloud-side knowledge base is updated. After receiving the update notification information, the in-vehicle device may send an update request to the server. The update request includes an identifier corresponding to a knowledge set stored in the in-vehicle device. After receiving the update request, the server may determine whether the knowledge set in the in-vehicle device is updated, and send an updated knowledge base to the in-vehicle device.

The server may receive an update query request sent by the in-vehicle device, and after receiving the update query request, whether the cloud-side knowledge base is updated is determined.

The update query request may include an identifier set, and the identifier set includes the identifier corresponding to the knowledge set stored in the in-vehicle device.

The server may determine, based on the update query request, whether a knowledge set corresponding to each identifier in the identifier set is updated in the cloud-side knowledge base. When it is determined that the knowledge set is updated, an updated knowledge set or updated knowledge is sent to the in-vehicle device.

FIG. 5 is a schematic flowchart of a method for establishing a knowledge base according to an embodiment of this application.

The method for establishing the knowledge base may be performed by a cloud apparatus (which may also be referred to as a cloud side in this application), or may be performed by a vehicle-side apparatus (which may also be referred to as a terminal side in this application). The cloud apparatus may be a server. The server may be one or more of different types of servers such as a physical server, a virtual server, and an edge server. The cloud apparatus may have a processing function and a receiving and sending function. The vehicle-side apparatus may be one or more of apparatuses such as a vehicle, an in-vehicle apparatus, and a chip.

As a closed field, an in-vehicle field has a plurality of types of data, such as vehicle domain knowledge, a driving status, and a user habit, which may affect information provided for a user. The plurality of types of data can be used to build a cloud-side knowledge base.

The cloud-side knowledge base includes basic data and convergent data. The cloud-side knowledge base includes a general knowledge set and a vehicle model knowledge set corresponding to each vehicle model.

It should be understood that the convergent data may include all or a part of the general knowledge set, or may include all or a part of a vehicle model knowledge base. The basic data may include all or a part of the general knowledge set, or may include all or a part of a vehicle model knowledge set. The cloud-side knowledge base does not need to obtain all knowledge at a time and can obtain the knowledge for a plurality of times or on demand.

The basic data includes a plurality of requests and a response corresponding to each request. Each response may include at least one of the following types of information: a text, a picture, a video, a control signal, and the like.

For example, for a request "how to adjust the driver seat position", a corresponding response may include one or more types of information in the text, the picture, or the video, and responses of all these types may be used to describe a manner of adjusting the driver seat position. A response of the text type corresponding to the request "how to adjust the driver seat position" may be "you may adjust the seat position, a backrest angle, and a seat height by using a pull rod and a handle below the front of the driver seat".

A corresponding response to a request "open the left rear vehicle door and vehicle window" may be a control signal used to open the left rear vehicle door and vehicle window. The control signal may be, for example, a controller area network (controller area network, CAN).

It should be understood that, in a correspondence between a request and response information, responses corresponding to different requests may be the same or different. This is not limited in this embodiment of this application.

The correspondence between a request and a response may be determined based on an open source knowledge base (such as a music library, a law library, a map library, and a medical knowledge base), an in-vehicle signal knowledge base (such as a CAN signal protocol and a sensor signal class), a vehicle domain specification knowledge base (a driving specification, user manuals and maintenance manuals of various vehicles), and the like. In a specific implementation process, one or more knowledge bases may be manually selected, to establish the basic data.

The convergent data includes a rule corresponding to each event in a plurality of events.

The convergent data may be obtained by processing the vehicle domain specification knowledge base, or the like. The vehicle domain specification knowledge base may include specification files of the vehicle domain, for example, a user manual, a maintenance manual, or a driving specification (such as laws and regulations).

Specifically, steps S501 to S503 may be performed to form the convergent data.

In S501, perform element extraction on a file. This file is a file in the vehicle domain specification knowledge base. The file may be represented by a natural language.

The file may be processed by using an element extraction model, to obtain each element in the file and a type corresponding to each element. Element types include an entity, a relationship, a status, an attribute, a quantity, and the like.

The entity includes objects that exist objectively and can be distinguished from each other (such as motor vehicle signal lights), and may also include a class entity (such as a traffic signal light). The class entity can also be understood as a concept.

The relationship may be used to represent a relationship between entities or events, for example, a belonging relationship, a magnitude relationship, or a logical relationship (the words such as should, not, and may represent the logical relationship). The event can be understood as a status of an object. The object can be the entity or the class entity, or an attribute of the entity, an attribute of the class entity, or the like.

The status indicates a status of the entity, such as open, close, or driving rightward.

The attribute is used to describe specific features of the entity, such as a validity period and visibility.

The quantity indicates a quantity of things, and may include a number, or may include a quantifier, for example, one year or two meters.

The element extraction model may be a neural network (neural network, NN) model obtained through training. The neural network model may include a neural unit. The neural unit may be an operation unit that uses $x_s$ and an intercept 1 as inputs. An output of the operation unit may be shown in Formula (1-1):

$$h_{W,b}(x) = f(W^T x) = f(\sum_{s=1}^{n} W_s x_s + b) \quad (1\text{-}1)$$

s=1, 2, ..., or n, n is a natural number greater than 1, $W_s$ is a weight of $x_s$, and b is a bias of the neural unit. f is an activation function (activation function) of the neural unit, which is used to introduce a nonlinear feature into the neural network, to convert an input signal in the neural unit into an output signal. The output signal of the activation function may be used as an input of a next convolutional layer. The activation function may be a sigmoid function. The neural network is a network constituted by linking a plurality of single neural units together. To be specific, an output of one neural unit may be an input of another neural unit. An input of each neural unit may be connected to a local receptive field of a previous layer to extract a feature of the local receptive field. The local receptive field may be a region including several neural units.

When training the element extraction model, a word of a preset type in a training file may be manually annotated. Annotation information includes the word of the preset type in the training file, and the annotated word of the preset type may also be referred to as an annotated element. The annotation information further includes a preset type corresponding to each annotated element. It should be understood that the preset type may include a plurality of types, for example, an entity, a relationship, a status, an attribute, or a quantity. The training file may be represented by a natural language.

A training output may be obtained by processing the training file by using an initial element extraction model. The training output may include a training element and a training type corresponding to each training element. A parameter of the initial element extraction model is adjusted to minimize a loss value. The loss value indicates a difference between a training output and annotation information, to obtain a trained element extraction model. It should be understood that when the difference between a training output and annotation information gradually converges or is less than a preset value, the trained element extraction model may be obtained.

There may be a plurality of training files. For a training file, the parameter of the initial element extraction model may be adjusted based on the training output and the annotation information, to minimize the loss value. The adjusted initial element extraction model is used to process another training file and adjust a parameter until an obtained loss value gradually converges, to obtain the trained element extraction model.

In a process of training a deep neural network, because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (that is, a loss value, loss) of the loss function indicates a larger difference. Therefore, training of the deep neural network is a process of minimizing the loss as much as possible.

A neural network may correct a size of a parameter in an initial neural network model in a training process by using an error back propagation (back propagation, BP) algorithm, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

In S502, an element group corresponding to file semantics is formed, where the element group includes one or more elements.

For each statement in a file, an element group corresponding to the statement may be formed. In other words, the element group of the statement may be obtained by using an element to represent semantics of the statement in the file.

A most critical element that can express the statement is extracted from statements in the file of the natural language, and an irrelevant word may be deleted, to be specific, a statement in the natural language is represented by using an element, to obtain an expression form that is simpler in an expression manner and occupies less space. A statement represented by an element may be referred to as the element group.

For example, the statement "the rear door is the vehicle door" may be represented as an element group: <entity: rear door> <relationship: belong to> <entity: vehicle door>.

For example, the statement "the trunk may also be referred to as a rear door" may be represented as an element group: <entity: rear door> <relationship: synonym> <entity: trunk>.

For example, the statement "a validity period of the motor vehicle driving license is six years" may be represented as an element group: <entity: motor vehicle driving license> <attribute: validity period> <value: six years>.

For example, the statement "do not open the trunk during driving" may be represented as an element group: <entity: vehicle > <status: driving > <logical relationship: not allowed > <entity: trunk > <status: open>.

An element is used to represent a statement in the natural language. On one hand, a simpler and more essential relationship and element can be stored with same semantics, and this saves storage space. On the other hand, when a user inputs a request by using the natural language, an inference speed can be further improved.

The element group may be stored in a resource description framework (resource description framework, RDF) format. The RDF may be used to describe a feature of an object and a relationship between objects.

For example, the element group <entity: rear door> <relationship: belong to> <entity: vehicle door> may be represented in an RDF format as follows:

```
<rdf: Description rdf: about = "rear door">
<rear door: isA> vehicle door <rear door: isA>
</rdf: Description>
```

In S503, a constraint rule is determined in the element group, to determine a generation rule.

The constraint rule indicates a relationship between events.

Each generation rule is obtained by sorting a constraint rule corresponding to an event.

An element group indicating the relationship between events may be referred to as the constraint rule. The constraint rule can be determined in the element group.

An element group indicating a relationship between objects may be referred to as an object constraint. The object constraint can be determined in the element group.

An event may indicate that an object is in a status. An object can be an entity or an attribute of an entity. For example, the object may be a vehicle door, a vehicle speed, visibility, or the like.

The constraint rule indicates a relationship between events. The relationship between events may be, for example, whether the events can occur simultaneously, and may indicate that different events are in an inclusion or mutual exclusion relationship.

For example, the element group <entity: vehicle> <status: driving> <logical relationship: not allowed> <entity: trunk> <status: opened> indicates the constraint rule: <event 1: vehicle driving> <logical relationship: not allowed> <event 2: trunk is opened>, where in the event 1, "vehicle" is an entity, "driving" is a status of the vehicle, and in the event 2, "trunk" is an entity, and "opened" is a status of the trunk.

At least one constraint condition of an event is sorted, and a generation rule corresponding to the event may be determined.

For example, for an event "the fog light is on", a generation rule corresponding to the event "the fog light is on" may be expressed as: IF <event: a vehicle is driving on a highway> and <event: environmental visibility is less than 200 meters> THEN <event: the fog light is on>.

The convergent data may include the generation rule and the object constraint.

A synonym library may be determined by using the object constraint. A synonym in the generative rule may be replaced by using the synonym library, so that the generation rule includes only one of a group of synonyms.

For example, based on the object constraint {trunk: [rear door, luggage cabin]}, it may be determined that the rear door, the luggage cabin, and the trunk are synonyms. The "rear door" and "luggage cabin" in each generation rule can be replaced with "trunk". Therefore, retrieval complexity can be reduced.

The server may establish the convergent data by performing S501 to S503. The cloud-side knowledge base established by the server may include the convergent data, or may include the basic data.

Then, when a knowledge base request sent by the vehicle is received, the knowledge base may be sent to the vehicle.

The server may send a terminal-side knowledge base to the in-vehicle device.

The cloud-side knowledge base includes a general knowledge base and a vehicle model knowledge base corresponding to each vehicle model. The terminal-side knowledge base may include the general knowledge base and a vehicle model knowledge base corresponding to the vehicle model.

In the cloud-side knowledge base, a knowledge base corresponding to each vehicle model may include a plurality of pieces of knowledge, and an identifier of each piece of knowledge may be represented as "automotive enterprise number-vehicle model number-knowledge number". In the basic data, a request and a response corresponding to the request can be understood as a piece of knowledge. In the convergent data, an object constraint or a generation rule can be understood as a piece of knowledge.

The cloud-side knowledge base may include a knowledge base related to various functions. The terminal-side knowledge base may include a knowledge base related to driving safety, and may further include a knowledge base of another function.

The following uses an example in which the in-vehicle device receives the terminal-side knowledge base and makes a decision by using a status of a vehicle and the terminal-side knowledge base.

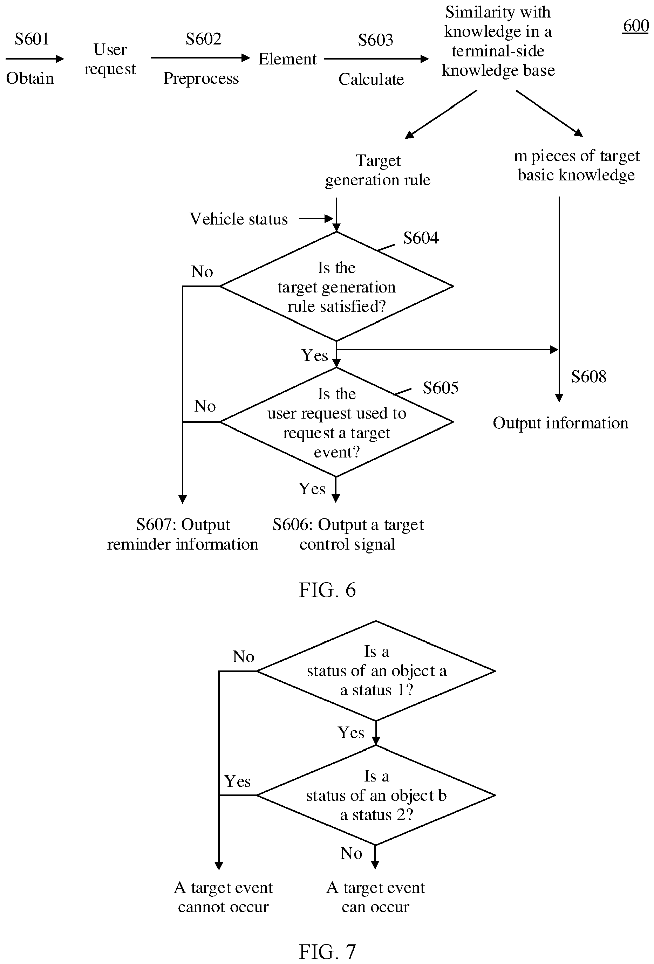

FIG. 6 is a schematic flowchart of a data processing method according to an embodiment of this application.

A data processing method 600 may be performed by a cloud apparatus (which may also be referred to as a cloud side in this application), or may be performed by a vehicle-side apparatus (which may also be referred to as a terminal side in this application). The cloud apparatus may be a server. The server may be one or more of different types of servers such as a physical server, a virtual server, and an edge server. The cloud apparatus may have a processing function and a receiving and sending function. The vehicle-side apparatus may be one or more of apparatuses such as a vehicle, an in-vehicle apparatus, and a chip.

The data processing method 600 includes steps S601 to S608. An example in which an in-vehicle device is used as an execution device is used for description.

13

In S601, the in-vehicle device obtains a user request.

In S602, the in-vehicle device preprocesses the user request.

The user request may be a natural language, for example, a voice or a text. The preprocessing on the user request includes word segmentation, part-of-speech tagging, pinyin-text conversion, and the like. Therefore, the in-vehicle device may determine an element in the user request based on a preprocessing result. The element can be represented by pinyin or the text.

Through the preprocessing on the user request, the element in the user request may indicate an event indicated by the user request. The user request includes a word indicating a first object and a word indicating a target status. An event indicated by a first event is that the first object is in the target status.

In S603, the in-vehicle device may determine m pieces of target basic knowledge with highest similarity from basic data based on a similarity between the element in the user request and knowledge in a terminal-side knowledge base, where m is a positive integer. A target generation rule with a highest similarity is determined in the convergent data.

In the basic data, each request and a response corresponding to the request can be understood as a piece of basic knowledge. The m pieces of target basic knowledge may be m pieces of basic knowledge (that is, m is a preset value) that are most similar to the user request in the basic data, or may be basic knowledge that is in the basic data and whose similarity to the user request is greater than a threshold.

The in-vehicle device may use a sorting algorithm in a search technology (lucene) frame to calculate a similarity.

In a specific implementation process, the sorting algorithm in the search technology framework may use a plurality of sorting algorithms, for example, may use a term frequency-inverse document frequency (term frequency-inverse document frequency, TF-IDF) index. The TF-IDF is a statistic method for evaluating importance of a character or word to a file set or a file in a language corpus. The importance of a character or word proportionally increases with increase of an occurrence frequency of the word in a file, and at the same time, proportionally decreases with increase of an occurrence frequency of the word in a language corpus. Various forms of TF-IDF weighting are often used by a search engine as a measure or rating of relevance between files and user queries.

The in-vehicle device may separately perform TF-IDF calculation on a pronunciation symbol representation and a text representation of the user request. Pinyin is used to represent a voice of a Chinese character and can be used as a pronunciation symbol. Pinyin is a tool that assists in pronunciation of a Chinese character and can record the pronunciation of a word.

The in-vehicle device may represent a similarity between the element in the user request and the knowledge based on an average value or a maximum value of a similarity between the element in the user request and the corresponding pronunciation symbol representation of the knowledge of the terminal-side knowledge base and a similarity between the element in the user request and the text representation.

In some embodiments, the in-vehicle device may determine, in the knowledge base by using an index, knowledge that needs to perform similarity calculation with the user request.

A function of the index is equivalent to a book directory, and required content can be quickly found based on a page number in the directory.

Before S601, the in-vehicle device may determine an index corresponding to each piece of knowledge in the terminal-side knowledge base. The index corresponding to each piece of knowledge can be determined by using an index writer (index writer).

Generation of the index of each piece of knowledge in the knowledge base may be performed by the server or the in-vehicle device.

The server may preprocess a cloud-side knowledge base to generate an index of each piece of knowledge in the cloud-side knowledge base. The server sends a knowledge set and an index corresponding to each piece of knowledge in the knowledge set to the vehicle.

Alternatively, the vehicle may perform preprocessing on the terminal-side knowledge base, to obtain an index corresponding to each piece of knowledge in the terminal-side knowledge base.

For the knowledge in the basic data, a preprocessing manner of the knowledge includes one or more of the following manners: element extraction, word segmentation, part-of-speech tagging, and pinyin conversion, or the like. For example, after word segmentation and part-of-speech conversion are performed on a statement in the basic data, a noun in the statement is used as an index of the knowledge; or after element extraction is performed on a statement in the basic data, an element used to represent an entity or an attribute is used as an index of the knowledge, or an element used to represent a status is used as an index of the knowledge. There may be one or more indexes of a piece of knowledge.

For knowledge in the convergent data, a preprocessing manner of the knowledge includes one or more of the following manners: part-of-speech tagging, and pinyin conversion of each element, or the like.

An index type may include one or more of a Chinese index, a pinyin index, an in-vehicle signal index, or the like. For example, for knowledge that uses an entity or an attribute in the knowledge as an index of the knowledge, a Chinese index of the knowledge that includes "open the trunk" may include "trunk".

The in-vehicle device may further convert the index of the knowledge by using a synonym library. For example, a rear door, a luggage cabin, and a trunk are determined as synonyms based on a common word library of a text (for example, a convergent data center includes an object constraint {trunk: [rear door, luggage cabin]}, indicating that the rear door, the luggage cabin, and the trunk are synonyms). For knowledge including "open the rear door", a Chinese index of the knowledge may include the trunk.

The synonym library may be determined based on the object constraint in the convergent data.

The in-vehicle device may determine a pinyin index corresponding to the Chinese index. The pinyin index may be one or more of a full spelling index, a short spelling index and an index derived from intermediate results. A full spelling index of "rear door" may be weimen; a short spelling index of "rear door" may be wm; and an index derived from intermediate results of "rear door" may be w, we, wei, weim, weime, or the like.

In S603, the in-vehicle device may preprocess the user request, to determine an index corresponding to the user request, and perform similarity calculation between knowledge that includes the index in the knowledge base and the user request.

A preprocessing manner of the user request includes one or more of the following manners: element extraction, word segmentation, part-of-speech tagging, and pinyin conversion, or the like.

It should be understood that the preprocessing on the user request may be the same as the preprocessing on the knowledge in the knowledge base. For example, for the preprocessing on the user request, the in-vehicle device may perform preprocessing in the same manner as the preprocessing of the knowledge in the basic data; or for the preprocessing of the user request, the in-vehicle device may perform element extraction on the user request, and then the in-vehicle device may perform processing in the same manner as the preprocessing of the knowledge in the convergent data.

Therefore, the index of the user request and the index of the knowledge in the knowledge base may have a same type, for example, both are Chinese indexes, or both include the full spelling index and the Chinese index.

That determining the index of the knowledge may be understood, by the in-vehicle device, as classifying the knowledge. By determining the index of the knowledge, the in-vehicle device may perform similarity calculation between only the knowledge that includes the index of the user request and the user request, and this reduces a calculation amount and improves an inference speed.

In the basic data, a storage format of knowledge whose index includes the "seat" may be:

```
{
    title: "seat";
    content: "xxx";
    sub_title_0: "position adjustment";
    content_0: "xxx";
    resource_0: {
                    "picture_a": "x, x";
                    "video_a": "x, x"; };
    question_0: {
                    question_a: "xxx";
                }
    sub_title_1: "backrest adjustment";
    content_1: "xxx";
    resource_1: {
                    "picture_b": "x, x";
                    "video_b": "x, x"; };
    question: {
                    question_b: "xxx";
                }
... }
```

The content is used to represent an index corresponding to "seat", content_0 is used to represent a subindex of "position adjustment", question_0 is used to represent a set of requests including the index corresponding to "seat" and the subindex of "position adjustment", question_a is a request, and picture_a (image a) and video_a (video a) in resource_0 are responses corresponding to the request question_a. content_1 is used to represent a subindex of "backrest adjustment", question_1 is used to represent a set of requests including the index corresponding to "seat" and the subindex of "position adjustment", question_b is a request, and picture b (image b) and video_b (video b) in resource_1 are responses corresponding to the request question_b.

A subindex is added to a category corresponding to an index and a category is further divided, and this can further reduce a calculation amount and improve an inference speed.

In step S603, the in-vehicle device may be performed by an index searcher (index searcher). The index searcher can sort search results that match request information based on the similarity and output knowledge that is ranked in the top.

In S604, the in-vehicle device determines whether a status of a vehicle meets a target generation rule.

The target generation rule is a generation rule corresponding to the first event. The target generation rule indicates a relationship between a first event and another object.

The in-vehicle device may determine a finite state transducer (finite state transducer, FST) of the first event according to the target generation rule. The finite state transducer may be represented as a directed acyclic graph. For example, a target generation rule of the first event is that the first event may occur when an event a occurs and an event b does not occur. A finite state transducer corresponding to the target generation rule is shown in FIG. 7. The event a indicates that an object a is in a status 1, and the event b indicates that an object b is in a status 2. The status of the vehicle includes the status of the object a and the status of the object b.

When a driving status of the vehicle meets the target generation rule, it is determined that the first event may occur, and S605 is performed. When the driving status of the vehicle does not meet the target generation rule, it is determined that the first event cannot occur, and S607 is performed.

In S605, the in-vehicle device determines whether the user request is used to request the first event.

That the user request is used to request the first event may alternatively be understood as that the user request is used to request occurrence of the first event.

When the user request is used to request the first event, S606 may be performed.

In S606, the in-vehicle device outputs a target control signal corresponding to the first event.

The in-vehicle device may send the target control signal to a vehicle controller. When the vehicle controller receives the target control signal, the vehicle controller may control the vehicle, and set the status of the first object to the target status, so that the first event occurs.

A control signal identifier may be used as an identifier of the control signal, and uniquely identifies control information. For example, 0x555 may be used as the control signal identifier, indicating a control signal. It should be understood that the control signal identifier may also be understood as an event identifier, and indicates an event that occurs when the vehicle controller controls the vehicle based on the control signal.

The control signal identifier and an event corresponding to the control signal may be expressed as follows:

```
{
    type_signal: can;
    id_frame: xxxx;
    id: "0x555";
    event: "the low light is turned on";
}
```

"type_signal: can" indicates that a type of the control signal is a CAN signal, "id_frame: xxxx" indicates that a signal frame of the control signal is specifically xxxx, content: "0x555" indicates that an identifier of the control signal is 0x555, and event: "the low light is turned on" indicates that an event corresponding to the control signal is "the low light is turned on".

The in-vehicle device may determine, based on a correspondence between an event and a control signal, the target control signal corresponding to the first event, and output the target control signal.

When the user request is used to request the first event, S607 may be performed.

In S607, the in-vehicle device outputs reminder information.

When the target generation rule is met, the reminder information may be used to query whether to perform the first event.

When the target generation rule is not met, the reminder information may be determined according to the target generation rule and based on the status of the vehicle.

The in-vehicle device may generate the reminder information based on a text template library and a reason why the first event cannot occur.

The reminder information may be represented by the natural language.

For example, if the user request is "open the vehicle window", the target generation rule is: <event: the vehicle speed is greater than or equal to 60 km/h> <logical relationship: not allowed> <event: open the vehicle window>. If the status of the vehicle indicates that the vehicle speed is 80 km/h (km/h), according to a template in the text template library: "B cannot be C because of A", where A is a condition that is not met, B is an object in the first event, and C is a status of the object B in the first event, reminder information may be generated: because "the vehicle speed is greater than or equal to 60 km/h", the "vehicle window" cannot be "opened".

The reminder information may be generated by using a natural language generation model. The natural language generation model may be a neural network model obtained through training.

When the natural language generation model is trained, a training dataset may be obtained, and the training dataset includes a plurality of pieces of training data and annotation information corresponding to each piece of training data. The training data includes a training rule, a training first event, a training status of a vehicle, and the like. The identification information includes training reminder information, the training rule indicates a relationship between a training first event and a training object, the training status of the vehicle indicates a status of the training object, and the training reminder information is reminder information for the training first event in the training status of the vehicle.

A training output may be obtained by processing the training data by using an initial natural language generation model. A parameter of the initial natural language generation model is adjusted to minimize a loss value between a training output and annotation information. That minimizing the loss value between a training output and annotation information indicates to minimize a difference between the training output and the annotation information. Processing is performed on other training data by using an adjusted initial natural language generation model. When the loss value gradually converges or is less than a preset value, training of the natural language generation model is completed.

The reminder information may be broadcast by using a text-to-speech (text-to-speech, TTS) technology, or may be displayed via a device such as a display.

The training data may further include the text template library.

The text template library may be manually input, or may be obtained by extracting text data by a relationship template extraction module.

The in-vehicle device may train the relationship template extraction module by using the training dataset. The training dataset includes a plurality of training texts and annotation information corresponding to each training text. The annotation information is a template corresponding to the training text.

Alternatively, after S604, decision information is determined, where the decision information indicates whether the first event can occur.

In S608, the decision information is processed by using the natural language generation model, and a feedback is sent to a user based on an output of the natural language generation model.

To-be-processed data is input into the natural language generation model, and the to-be-processed data may include the decision information and a natural language template library.

The natural language generation model processes the to-be-processed data to obtain output information. The output information includes natural language information, and the natural language information is used to represent the decision information.

The natural language generation model is obtained through training by using a training data set. The training data set includes a plurality of pieces of training data and annotation information corresponding to each piece of training data.

The training data includes training decision information and the natural language template library, and the training decision information indicates whether a training event can occur. The annotation information corresponding to the training data includes training natural language information corresponding to the training decision information in the training data. The training natural language information may be manually annotated.

Therefore, when S608 is performed, the to-be-processed data input into the natural language generation model may further include the m pieces of target basic knowledge determined in S603. The to-be-processed data is processed by using the natural language generation model, and the obtained output information further includes basic knowledge corresponding to the decision information.

The natural language information may be determined based on the basic knowledge corresponding to the decision information.

For example, the decision information indicates that the trunk may be opened, and the basic knowledge corresponding to the decision information includes a request "how to open the trunk" and a response "the trunk may be opened by pressing a button A" corresponding to the request. The natural language information may be "you can open the trunk by pressing the button A".

The basic knowledge corresponding to the decision information may include one or more forms of information of a text, a picture, a video, or the like. The text, the picture, the video, or the like in the basic knowledge corresponding to the decision information may be presented to the user by using a device such as a speaker or a display.

For example, the decision information indicates that the trunk may be opened, and the basic knowledge corresponding to the decision information includes basic knowledge related to opening the trunk in the m pieces of target basic knowledge. The decision information indicates that the trunk cannot be opened, and the basic knowledge corresponding to the decision information includes basic knowledge related to not opening (that is, closing) the trunk in the m pieces of target basic knowledge.

When the decision information indicates that the first event can be executed, the basic knowledge corresponding to the decision information may further include a control signal corresponding to the first event. The control signal may be sent to a control device to implement the first event.

The training data may further include m pieces of training target basic knowledge, and the m pieces of training target basic knowledge are m pieces of basic knowledge that are in the basic data and that are most similar to the user request. The annotation information may further include training target basic knowledge corresponding to training decision information in the m pieces of training target basic knowledge.

The natural language generation model may be a type of a neural network model such as a bidirectional encoder representations from transformers (bidirectional encoder representations from transformers, BERT) module, a document to vecto (document to vecto, Doc2Vec) module, or a long short-term memory (long short-term memory, LSTM) network module.

To obtain the natural language generation model, the training data is input into the initial natural language generation model. A parameter of the initial natural language generation model is adjusted to minimize a loss value. The loss value is used for a difference between an output of the initial natural language generation model and the annotation information. Therefore, a trained natural language generation model may be obtained.

Other training data is processed by using the adjusted initial natural language generation model, and the parameter of the initial natural language generation model is adjusted until an obtained loss value gradually converges, that is, the trained natural language generation model is obtained.

When there are a plurality of pieces of training target basic knowledge corresponding to the training decision information, the annotation information may further include a training ranking of the plurality of pieces of training target basic knowledge. Therefore, the natural language generation model processes the to-be-processed data, and when there are a plurality of pieces of basic knowledge corresponding to the decision information in a processing result, the processing result may further include a ranking of the basic knowledge corresponding to the plurality of pieces of decision information. Therefore, the basic knowledge corresponding to the decision information may be output based on the ranking.

The natural language generation model may be obtained through training by the server. The server may send the natural language generation model to the in-vehicle device, and the in-vehicle device processes the to-be-processed data by using the natural language generation model.

In some embodiments, the user may rank the plurality of pieces of basic knowledge corresponding to the decision information in the processing result of a natural language processing model. The ranking may be used as a user ranking, and the natural language processing model is further trained. The user ranking may include ranking of all or some basic knowledge in the ranking of the plurality of pieces of basic knowledge corresponding to the decision information. The user ranking indicates basic knowledge that best meets a user requirement.

The in-vehicle device may send the user ranking to the server, and the server further trains a ranking model. The server may send the ranking model obtained through further training to the in-vehicle device.

During further training, the training data may further include user information, for example, gender, age, occupation, a driving age, and a highest education degree of the user. The input data of the natural language generation model may further include the user information. In this way, the natural language generation model can provide personalized output for the user in the m pieces of target basic knowledge based on the user information.

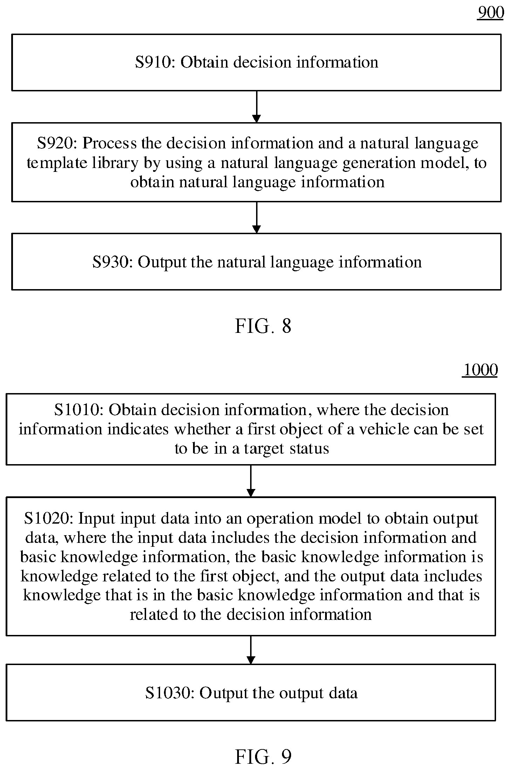

FIG. 8 is a schematic flowchart of a data processing method according to an embodiment of this application.

A data processing method 900 may be performed by a cloud apparatus (which may also be referred to as a cloud side in this application), or may be performed by a vehicle-side apparatus (which may also be referred to as a terminal side in this application). The cloud apparatus may be a server. The server may be one or more different types of servers such as a physical server, a virtual server, and an edge server. The cloud apparatus may have a processing function and a receiving and sending function. The vehicle-side apparatus may be one or more of apparatuses such as a vehicle, an in-vehicle apparatus, and a chip.

The data processing method 900 includes steps S910 to S930.

In S910, obtain decision information.

The decision information indicates whether a first event can occur.

In S920, the decision information and a natural language template library are processed by using a natural language generation model, to obtain natural language information.

The natural language generation module is obtained by training by using a training data set. The training data set includes a plurality of pieces of training data and annotation information corresponding to each piece of training data, the training data includes training decision information and the natural language template library, and the training decision information indicates whether a training event can occur.

The annotation information corresponding to the training data includes training natural language information corresponding to the training decision information in the training data. The training natural language information may be manually annotated.

In S930, output the natural language information, where the natural language information is used to represent the decision information.

After the decision information indicating whether the first event can occur is obtained in S910 to S930, the natural language information may be generated by using a neural network model based on the natural language template library and the decision information, to provide a feedback of the decision information for a user.

FIG. 9 is a schematic flowchart of a data processing method according to an embodiment of this application.

A data processing method 1000 may be performed by a cloud apparatus (which may also be referred to as a cloud side in this application), or may be performed by a vehicle-side apparatus (which may also be referred to as a terminal side in this application). The cloud apparatus may be a server. The server may be one or more different types of servers such as a physical server, a virtual server, and an edge server. The cloud apparatus may have a processing function and a receiving and sending function. The vehicle-side apparatus may be one or more of apparatuses such as a vehicle, an in-vehicle apparatus, and a chip.

The data processing method 1000 includes steps S1010 to S1030.

S1010: Obtain decision information, where the decision information indicates whether a first object of a vehicle can be set to be in a target status.

S1020: Input input data into an operation model to obtain output data, where the input data includes the decision information and basic knowledge information, the basic knowledge information is knowledge related to the first object, and the output data includes knowledge that is in the basic knowledge information and that is related to the decision information.

S1030: Output the output data.

The decision information and the knowledge related to the first object are processed by using the operation model, and target knowledge related to the decision information is selected from the knowledge related to the first object, to output the target knowledge related to the decision information. Content of the output information is determined based on the decision information indicating whether a first event can be in the target status, so that the output information better conforms to a status of the vehicle, and user experience is improved.

It should be understood that the target knowledge may include a resource in one or more forms of a text, a picture, a video, or the like.

The decision information may be determined based on the status of the vehicle. For example, the decision information may be determined based on a status of a second object of the vehicle. Specifically, the decision information may be determined through S110 and S120. Alternatively, the decision information may be obtained by using user input or in another manner.

The operation model may determine, in the basic knowledge information by using an object status corresponding to each piece of knowledge, knowledge related to the decision information. When the decision information indicates that the first object can be set to be in the target status, the knowledge related to the decision information may be knowledge corresponding to the first object in the target status. When the decision information indicates that the first object cannot be set to be in the target status, the knowledge related to the decision information may be knowledge corresponding to another status in which the first status is.

Alternatively, the operation model may be a neural network model obtained through training.

The operation model may be obtained through training by using a training data set, and the training data set includes a plurality of pieces of training data and annotation information corresponding to each piece of training data. The training data includes training decision information and training basic knowledge information, where the training decision information indicates whether a training object of the vehicle can be set to be in a training target status, the training basic knowledge information includes knowledge related to the training object, and the annotation information corresponding to the training data includes knowledge that is in the training basic knowledge information and that is related to the training decision information.

The target knowledge may include control information, and the control information indicates a controller to set a status set for the first object. In S1030, the control information may be sent to the controller.

When the target knowledge includes the control information, the control information is sent to the controller, to set the status of the first object, so that user experience can be improved.

It should be understood that when the decision information indicates that the first object can be set to be in the target status, the control information in the target knowledge may be used to set the first object to the control information of the target status. When the decision information indicates that the first object cannot be set to be in the target status, the control information in the target knowledge may be used to set the first object to control information in another status other than the target status.

The target knowledge may also include text display information, and the text display information includes operation introduction in a form of text. The input data may further include a natural language template. The output data may include natural language information. The natural language information includes the text display information, the natural language information further indicates the decision information, and the natural language information is a statement in a natural language expressed by using the natural language template.

That output the output data includes: outputting the natural language information to a user.

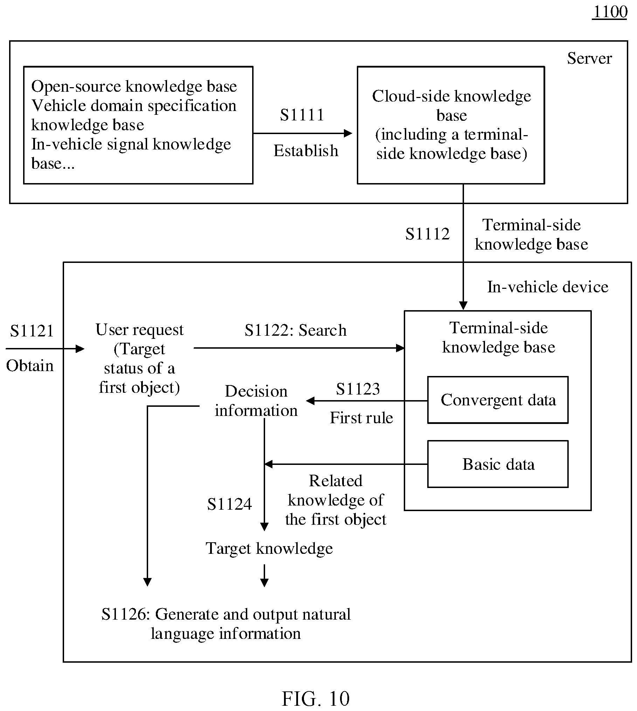

FIG. 10 is a schematic flowchart of a data processing method according to an embodiment of this application.

A data processing method 1100 may be performed in an interactive system. The interactive system includes a cloud apparatus and a vehicle-side apparatus. The cloud apparatus may be a server. The server may be one or more different types of servers such as a physical server, a virtual server, and an edge server. The cloud apparatus may have a processing function and a receiving and sending function. The vehicle-side apparatus may be one or more of apparatuses such as a vehicle, an in-vehicle apparatus, and a chip. An example in which the cloud apparatus is a server and the vehicle-side apparatus is an in-vehicle device is used for description.

The data processing method 1100 includes steps S1111 to S1126.

In S1111, the server establishes a cloud-side knowledge base.

The server may establish the cloud-side knowledge base by using a plurality of knowledge bases such as an open source knowledge base, a vehicle domain specification knowledge base, and an in-vehicle signal knowledge base. For a method for establishing the cloud-side knowledge base, refer to the description in FIG. 5.

In S1112, the server sends a terminal-side knowledge base to the in-vehicle device.

The terminal-side knowledge base includes a general knowledge set and a vehicle model knowledge set, and the vehicle model knowledge set includes knowledge corresponding to a vehicle model of a vehicle in which the in-vehicle device is located.

The cloud-side knowledge base includes the general knowledge set and the vehicle model knowledge set.

The terminal-side knowledge base includes basic data and convergent data. The basic data includes a plurality of pieces of basic knowledge.

In S1121, the in-vehicle device obtains a user request, where the user request includes information indicating a target status of a first object.

The user request may be a natural language. That the first object is in the target status may be understood as a first event.

In S1122, the in-vehicle device performs retrieval in the terminal-side knowledge base, determines a first rule in the convergent data, and determines, in the basic data, knowledge related to the first object.

The first rule is a rule corresponding to the target status of the first object. The first rule may be a rule with a highest similarity between the convergent data and the user request.

The knowledge related to the first object is a plurality of pieces of knowledge that is in the basic data and that is most similar to the user request. For example, the knowledge related to the first object may be a plurality of pieces of knowledge that is in the basic data and whose similarity to the user request is greater than a preset value, or the knowledge related to the first object may be a preset quantity of rules that are in the basic data and whose similarity to the user request is the highest.

Specifically, refer to descriptions of S602 and S603 in the method 600.

In S1123, the in-vehicle device determines decision information based on the status of the vehicle and according to the first rule, where the decision information indicates whether the first event can occur.

Specifically, the decision information may be determined by using the data processing method 100. The status of the vehicle includes a status of a second object, and the first event is that the first object is in the target status. The convergent data includes the first rule.

In S1124, the in-vehicle device processes input data, where the input data includes the decision information and the knowledge related to the first object, and determines, from the knowledge related to the first object, target knowledge related to the decision information.

For details, refer to the description of S1020 in the data processing method 1000.

In S1125, the in-vehicle device generates and outputs natural language information based on the decision information and the target knowledge.

For details, refer to the description of S1030 in the data processing method 1000 and the description of the data processing method 900.

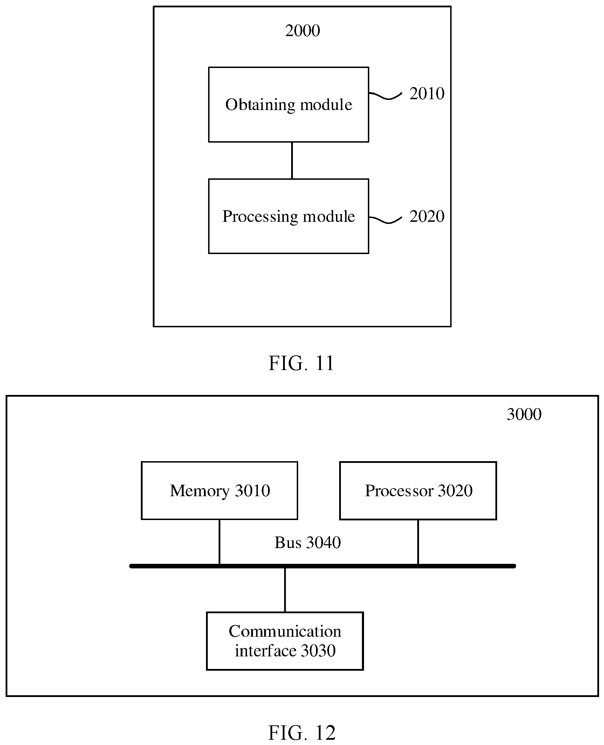

The foregoing describes the interactive system and the method embodiments of this application with reference to FIG. 1 to FIG. 10. The following describes the apparatus embodiments of this application with reference to FIG. 11 to FIG. 13. It should be understood that the descriptions of the embodiments correspond to each other. Therefore, for a part that is not described in detail, refer to the descriptions of the foregoing interactive system and method embodiments.

FIG. 11 is a schematic diagram of a structure of a data processing apparatus according to an embodiment of this application.

The data processing apparatus may be a computing device or an electronic device (for example, a terminal), or may be an apparatus in an electronic device (for example, an internet service provider (internet service provider, ISP) or a system on a chip (system on a chip, SoC)). In addition, the foregoing data processing method and the foregoing optional embodiments may be implemented.

As shown in FIG. 11, a data processing apparatus 2000 includes an obtaining module 2010 and a processing module 2020. The obtaining module 2010 is configured to perform any step of S110 in the data processing method 100, S601 in the data processing method 600, S910 in the data processing method 900, S1010 in the data processing method 1000, and S1121 in the data processing method 1100, and any optional example thereof. The processing unit 2020 is configured to perform any step of S120 in the data processing method 100, S602 to S605 in the data processing method 600, S920 in the data processing method 900, S1020 in the data processing method 1000, and S1122 to S1126 in the data processing method 1100, and any optional example thereof. The data processing apparatus 2000 may further include an output module, configured to perform S606 to S608 in the data processing method 600, S930 in the data processing method 900, S1030 in the data processing method 1000, and S1126 in the data processing method 1100. For details, refer to detailed descriptions in the method examples. Details are not described herein again.

It should be understood that the image processing apparatus in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the image processing apparatus in this embodiment of this application may be implemented by hardware. The processing module 2020 may be a processor (for example, a neural-network processing unit (neural-network processing unit, NPU), a central processing unit (central processing unit, CPU), or a processor in a system chip), the obtaining unit 2010 may be a transceiver circuit or an interface circuit, and the output module may be a transceiver circuit or an interface circuit. Alternatively, the image processing apparatus in this embodiment of this application may be implemented by a combination of a processor and a software module.

It should be understood that for processing details of the apparatus in this embodiment of this application, refer to related descriptions in FIG. 1 to FIG. 10. Details are not described again in this embodiment of this application.

FIG. 12 is a schematic diagram of a structure of a data processing apparatus according to an embodiment of this application.

A data processing apparatus 3000 includes a processor 3020 and a communication interface 3030.

Optionally, the data processing apparatus 3000 may further include one or more of a memory 3010 and a bus 3040. Any two or all three of the memory 3010, the processor 3020, and the communication interface 3030 may be mutually connected through the bus 3040.

Optionally, the memory 3010 may be a read-only memory (read-only memory, ROM), a static storage device, a dynamic storage device, or a random access memory (random access memory, RAM). The memory 1201 may store a program. When the program stored in the memory 3010 is executed by the processor 1202, the processor 3020 and the communication interface 3030 are configured to perform the steps of the data processing method in embodiments of this application. In other words, the processor 3020 may obtain stored instructions from the memory 3010 through the communication interface 3030, to perform the steps of the data processing method provided in embodiments of this application.

Optionally, the processor 3020 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement functions that need to be performed by units in the data processing apparatus provided in embodiments of this application, or perform steps of the data processing method provided in embodiments of this application.

Optionally, the processor 3020 may alternatively be an integrated circuit chip, and has a signal processing capability. In an implementation process, the steps of the data processing method in embodiments of this application may be completed by using a hardware integrated logic circuit in the processor or instructions in a form of software.

Optionally, the processor 3020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in this field, such as a random access memory, a flash memory, a read-only memory, a programmable read-only memory, an electrically erasable programmable memory, or a register. The storage medium is located in the memory. The processor reads information in the memory, and completes, in combination with hardware of the processor, a function that needs to be performed by a unit included in the data processing apparatus in embodiments of this application, or performs the steps of the data processing method in embodiments of this application.

Optionally, the communication interface 3030 may use a transceiver apparatus, for example, but not limited to, a transceiver, to implement communication between the apparatus and another device or a communication network.

The communication interface 3030 may be, for example, an interface circuit.

The bus 3040 may include a path for transmitting information between the components (for example, the memory, the processor, and the communication interface) of the apparatus.

Embodiments of this application further provide a terminal, including the data processing apparatus described above. The terminal may be an in-vehicle device, a server, or a vehicle.

According to an embodiment of this application, a computer program storage medium is further provided. The computer program storage medium has program instructions, and when the program instructions are executed, the foregoing method is performed.

According to an embodiment of this application, a chip system is further provided. The chip system includes at least one processor, and when program instructions are executed by the at least one processor, the foregoing method is performed.

A person of ordinary skill in the art may be aware that units and algorithm steps in the examples described with reference to the embodiments disclosed in this specification may be implemented by electronic hardware or a combination of computer software and electronic hardware. Whether these functions are performed in a hardware or software manner depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the embodiments of this application, "at least one" means one or more, and "a plurality of" means two or more. The term "and/or" describes an association relationship between associated objects, and indicates that there may be three relationships. For example, A and/or B may indicate the following cases: There is only A, there are both A and B, and there is only B. A and B may be singular or plural. The character "/" generally indicates an "or" relationship between the associated objects. "At least one of the following items" or a similar expression indicates any combination of these items, including a single item or any combination of a plurality of items. For example, "at least one of a, b, and c" may represent a, b, c, a-b, a-c, b-c, or a-b-c, where a, b, and c may be singular or plural. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed system, apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

When the function is implemented in the form of a software function unit and sold or used as an independent product, the integrated unit may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A data processing method, wherein the method comprises:

    obtaining a status of a second object of a vehicle; and
    determining, based on the status of the second object and according to a first rule, whether a status of a first object of the vehicle can be a target status, wherein the first rule indicates a relationship between the second object and the first object in the target status.

2.  The method according to claim 1, wherein the method further comprises:
    obtaining a user instruction, wherein the user instruction comprises information indicating the first object in the target status.

3.  The method according to claim 2, wherein the obtaining a status of a second object comprises: detecting the status of the second object according to the first rule, wherein the first rule is a rule corresponding to the first object in the target status.

4.  The method according to claim 2 or 3, wherein
    the obtaining a user instruction comprises:

    obtaining a natural language input by a user; and
    extracting a plurality of instruction elements in the natural language to form the user instruction, wherein the user instruction comprises the plurality of instruction elements, each instruction element is determined based on a word of a preset type in the natural language, the plurality of instruction elements comprise a first instruction element and a second instruction element, the first instruction element indicates the first object, and the second instruction element indicates the target status; and
    the method further comprises: determining the first rule based on the user instruction, wherein the first rule is the rule corresponding to the first object in the target status.

5.  The method according to claim 4, wherein the first rule comprises the first instruction element and the second instruction element.

6.  The method according to any one of claims 1 to 5, wherein

    the method further comprises: obtaining the status of the first object; and
    the determining, based on the status of the second object and according to a first rule, whether a status of a first object of the vehicle can be a target status comprises: when the status of the first object is the target status, determining, based on the status of the second object and according to the first rule, whether the status of the first object can be the target status.

7.  The method according to any one of claims 1 to 6, wherein the first object is a component in the vehicle, a feature of the component, a feature of the vehicle, or a feature of an environment around the vehicle.

8.  A data processing apparatus, wherein the apparatus comprises a memory and a processor, the memory is configured to store a program, and when the program is run on the processor, the processor is configured to perform the method according to any one of claims 1 to 7.

9.  A data processing apparatus, wherein the apparatus comprises functional modules configured to perform the method according to any one of claims 1 to 7.

10. A computer program storage medium, wherein the computer program storage medium has program instructions, and when the program instructions are executed, the method according to any one of claims 1 to 7 is performed.

11. A chip, wherein the chip comprises at least one processor, and when program instructions are executed by the at least one processor, the method according to any one of claims 1 to 7 is performed.

12. A vehicle, comprising the data processing apparatus according to claim 8 or 9.

100

| S110: Obtain a status of a second object of a vehicle |
| --- |

| S120: Determine, based on the status of the second object and according to a first rule, whether a status of a first object of the vehicle can be a target status, where the first rule indicates a relationship between the second object and the first object in the preset status |
| --- |

FIG. 1

| Server 210 | | |
| --- | --- | --- |
| | Cloud-side knowledge base | |

Vehicle status ⟶ | In-vehicle device 220 | ⟶ Decision-making

FIG. 2

300

| In-vehicle device | Server |

S301: Target status of a first object
and a status of a second object

S302: Determine decision information based
on a status of a vehicle and according to a
first rule

S303: Decision information

FIG. 3

| In-vehicle device | Server |

S401: First rule

FIG. 4

File —— S501 —→ Element —— S502 —→ Element group —— S503 —→ Constraint rule
Element extraction    Represent file semantics    Generation rule

FIG. 5

600

S601 Obtain → User request

S602 Preprocess → Element

S603 Calculate → Similarity with knowledge in a terminal-side knowledge base

Target generation rule

m pieces of target basic knowledge

Vehicle status →

S604

Is the target generation rule satisfied?

No

Yes

S605

Is the user request used to request a target event?

No

Yes

S608

Output information

S607: Output reminder information

S606: Output a target control signal

FIG. 6

Is a status of an object a a status 1?

No

Yes

Is a status of an object b a status 2?

Yes

No

A target event cannot occur

A target event can occur

FIG. 7

900

```
┌─────────────────────────────────────────────────────┐
│         S910: Obtain decision information            │
└─────────────────────────────────────────────────────┘
                          │
                          ▼
┌─────────────────────────────────────────────────────┐
│ S920: Process the decision information and a natural │
│ language template library by using a natural         │
│ language generation model, to obtain natural         │
│ language information                                 │
└─────────────────────────────────────────────────────┘
                          │
                          ▼
┌─────────────────────────────────────────────────────┐
│    S930: Output the natural language information     │
└─────────────────────────────────────────────────────┘
```

FIG. 8

1000

```
┌─────────────────────────────────────────────────────┐
│ S1010: Obtain decision information, where the        │
│ decision information indicates whether a first       │
│ object of a vehicle can be set to be in a target     │
│ status                                               │
└─────────────────────────────────────────────────────┘
                          │
                          ▼
┌─────────────────────────────────────────────────────┐
│ S1020: Input input data into an operation model to   │
│ obtain output data, where the input data includes    │
│ the decision information and basic knowledge          │
│ information, the basic knowledge information is       │
│ knowledge related to the first object, and the       │
│ output data includes knowledge that is in the basic  │
│ knowledge information and that is related to the      │
│ decision information                                 │
└─────────────────────────────────────────────────────┘
                          │
                          ▼
┌─────────────────────────────────────────────────────┐
│            S1030: Output the output data             │
└─────────────────────────────────────────────────────┘
```

FIG. 9

1100

Server

| Open-source knowledge base Vehicle domain specification knowledge base In-vehicle signal knowledge base... | S1111 Establish → | Cloud-side knowledge base (including a terminal-side knowledge base) |

S1112 | Terminal-side knowledge base

In-vehicle device

S1121 Obtain → User request (Target status of a first object)

S1122: Search →

Terminal-side knowledge base

Decision information

S1123 First rule ← Convergent data

S1124 ← Related knowledge of the first object ← Basic data

Target knowledge

S1126: Generate and output natural language information

FIG. 10

2000

Obtaining module ～ 2010

Processing module ～ 2020

FIG. 11

3000

Memory 3010

Processor 3020

Bus 3040

Communication
interface 3030

FIG. 12

International application No.

**PCT/CN2021/087959**

**A. CLASSIFICATION OF SUBJECT MATTER**

B60J 7/057(2006.01)i

According to International Patent Classification (IPC) or to both national classification and IPC

**B. FIELDS SEARCHED**

Minimum documentation searched (classification system followed by classification symbols)

B60J,E05F,G06F,B60R,H02P,B60W

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 车辆, 服务器, 智能语音助手, 人机, 交互, 互动, 响应, 灵活性, 车速, 状态, 车窗, 开, 关, 检测, 规则, 关系, 关联, 触发, 条件, 决策, 自然语言, 语义, 知识库, 告警, 提醒, 调整, 告知, vehicle, car, server, automotive smart assistant, human-machine, interactive, responsive, flexible, speed, state, window, open, close, detect, rule, relationship, association, trigger, condition, decision, natural language, semantics, knowledge, alarm, reminder, adjustment, announcement

**C. DOCUMENTS CONSIDERED TO BE RELEVANT**

| Category* | Citation of document, with indication, where appropriate, of the relevant passages | Relevant to claim No. |
|---|---|---|
| X | CN 110588307 A (CHERY AUTOMOBILE CO., LTD.) 20 December 2019 (2019-12-20) description, paragraphs [0055]-[0129], and figures 1-9 | 1-3, 6-12 |
| Y | CN 110588307 A (CHERY AUTOMOBILE CO., LTD.) 20 December 2019 (2019-12-20) description, paragraphs [0055]-[0129], and figures 1-9 | 4-5 |
| Y | CN 112061059 A (GUANGZHOU XPENG AUTOMOBILE TECHNOLOGY CO., LTD.) 11 December 2020 (2020-12-11) description, paragraphs [0083]-[0150] | 4-5 |
| A | CN 112009494 A (HUAWEI TECHNOLOGIES CO., LTD.) 01 December 2020 (2020-12-01) entire document | 1-12 |
| A | CN 210105599 U (BYD CO., LTD.) 21 February 2020 (2020-02-21) entire document | 1-12 |
| A | US 2007003258 A1 (FRANZAN, G.) 04 January 2007 (2007-01-04) entire document | 1-12 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 January 2022** | **19 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/087959**

| Patent document cited in search report | | | Publication date (day/month/year) | Patent family member(s) | | | Publication date (day/month/year) |
|---|---|---|---|---|---|---|---|
| CN | 110588307 | A | 20 December 2019 | None | | | |
| CN | 112061059 | A | 11 December 2020 | None | | | |
| CN | 112009494 | A | 01 December 2020 | None | | | |
| CN | 210105599 | U | 21 February 2020 | None | | | |
| US | 2007003258 | A1 | 04 January 2007 | DE | 102005030600 | A1 | 11 January 2007 |
| | | | | FR | 2894094 | A1 | 01 June 2007 |

Form PCT/ISA/210 (patent family annex) (January 2015)